# EUROPEAN PATENT SPECIFICATION

(11) **EP 3 346 481 B1**
(45) Date of publication and mention of the grant of the patent: **15.11.2023**
(21) Application number: 16841690.7
(22) Date of filing: 26.08.2016
(51) Int. Cl.: H01H 33/666, H01H 33/66, H01H 33/662, H02B 13/035

(54) **SWITCH-OPENING SPEED ADJUSTMENT MECHANISM AND SWITCH GEAR**
SCHALTÖFFNUNGSGESCHWINDIGKEITSEINSTELLMECHANISMUS UND SCHALTGETRIEBE
MÉCANISME DE RÉGLAGE DE VITESSE D'OUVERTURE DE COMMUTATION ET APPAREILLAGE DE COMMUTATION

(30) Priority: 31.08.2015 JP 2015169917
(43) Date of publication of application: 11.07.2018
(73) Proprietor: Mitsubishi Electric Corporation, Chiyoda-ku Tokyo 100-8310 (JP)
(72) Inventor: YAMAJI, Yuichi, Tokyo 100-8310 (JP); KURODA, Takashi, Tokyo 100-8310 (JP); EBATO, Teruaki, Tokyo 100-8310 (JP)
(74) Representative: Mewburn Ellis LLP
(86) International application number: PCT/JP2016/074905
(87) International publication number: WO 2017/038658

(56) References cited:
- EP-A1- 1 653 492
- EP-A1- 1 653 492
- JP-A- H10 321 089
- JP-A- H11 162 304
- JP-A- H11 162 304
- JP-U- S4 926 956
- JP-U- H02 138 819
- JP-U- H02 138 819
- JP-U- S62 191 040
- US-B1- 7 075 027

## Description

### TECHNICAL FIELD

The present invention relates to a structure for adjusting the switch-opening speed of a movable contact of a vacuum valve stored inside a switchgear.

### BACKGROUND ART

In a vacuum switching device, the inside of a metallic container is sealed in a vacuum state. In the metallic container grounded, a movable electrode and a fixed electrode are arranged being opposed to each other. The movable electrode is connected to an insulation rod. The movable electrode is driven upward and downward via the insulation rod by an operation mechanism provided separately with the vacuum valve, to open and close the fixed electrode and the movable electrode. In addition, the insulation rod is connected to the metallic container via a bellows, and the insulation rod can be driven while the vacuum state is maintained. The movable electrode stops at two positions of a closed position and a disconnected position, and the movement speed of the movable electrode is reduced after the movable electrode passes through the opened position. Adjustment of the movement speed is performed by a shock absorber of the operation mechanism (see, for example, Patent Document 1). EP 1 653 492 A1 describes an adjustment member and method of its use for circuit interrupters, the adjustment member comprises a mechanism including a sprung link-and-pin system and a thread and nut arrangement allowing the compression of the spring to be adjusted. JP H02 138819 U describes a switchgear. JP H11 162304 A describes an operation mechanism for a vacuum circuit breaker having a sprung link-and-pin system and a thread and nut arrangement allowing the compression of the spring to be adjusted.

### CITATION LIST

### PATENT DOCUMENT

Patent Document 1: Japanese Laid-Open Patent Publication No. 2000-215768 (paragraph [0024] and FIG. 6)

### SUMMARY OF THE INVENTION

### PROBLEMS TO BE SOLVED BY THE INVENTION

In the conventional vacuum switching device as disclosed in Patent Document 1, adjustment of the movement speed of the movable electrode, i.e., a movable contact, that is, adjustment of the switch-opening speed is performed by the shock absorber. Here, if the switch-opening speed of the movable electrode needs to be changed, it is necessary to change the shock absorber itself in order to change a damping force relevant to change of the switch-opening speed. Thus, change of the switch-opening speed of the movable electrode needs cost and time, and therefore the adjustment cannot be performed easily.

The present invention has been made to solve the above problem, and an object of the present invention is to obtain a switch-opening speed adjustment mechanism capable of easily adjusting the switch-opening speed of the movable contact.

### SOLUTION TO THE PROBLEMS

A switch-opening speed adjustment mechanism according to the present invention includes the features of appended claim 1. An alternative solution according to the invention includes the features of appended claim 2.

### EFFECT OF THE INVENTION

The present invention is provided with: a vacuum valve having, inside the vacuum valve, a fixed contact and a movable contact contactable with and separable from the fixed contact; an operation mechanism which causes the movable contact to contact with or be separated from the fixed contact; a link which is rotated by the operation mechanism; a pin which is moved in the contact/separation direction of the movable contact by the link; a first pipe connected to the pin; a contact-pressure spring which is in contact with an end of the first pipe and applies a contact pressure to the movable contact; a second pipe in contact with a surface, of the contact-pressure spring, that is opposite to a side in contact with the first pipe; a pipe end member welded to the other end of the first pipe; a shaft provided inside the first pipe, the contact-pressure spring, and the second pipe concentrically therewith; a headless bolt which is in contact with an end of the shaft and penetrates through the pipe end member, an end of the headless bolt being in contact with the shaft; and a nut which is screwed to the headless bolt and which is rotated to compress or release the contact-pressure spring, thereby adjusting a switch-opening speed of the movable contact. Therefore, it is possible to easily adjust the contact-pressure spring and easily confirm the state of the contact-pressure spring.

### BRIEF DESCRIPTION OF THE DRAWINGS

[FIG. 1] FIG. 1 is a side view of a contact-pressure spring portion in embodiment 1.
[FIG. 2] FIG. 2 is a plan view of the contact-pressure spring portion in embodiment 1.
[FIG. 3] FIG. 3 is a side view of the contact-pressure spring portion in embodiment 1 (when a contact-pressure load is applied).
[FIG. 4] FIG. 4 is a side view of a contact-pressure spring portion in embodiment 2.
[FIG. 5] FIG. 5 is a plan view of the contact-pressure spring portion in embodiment 2.
[FIG. 6] FIG. 6 is a side view of the contact-pressure spring portion in embodiment 2 (when a contact-pressure load is applied).
[FIG. 7] FIG. 7 is a side view of a contact-pressure spring portion in embodiment 3.

### DESCRIPTION OF EMBODIMENTS

### Embodiment 1

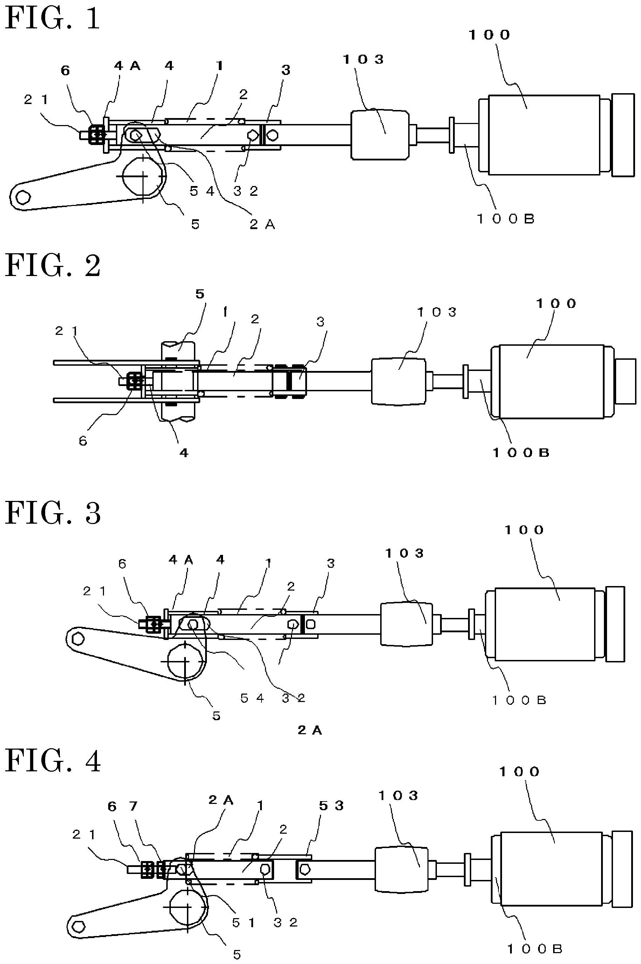

FIG. 1 is a side view of a contact-pressure spring portion in embodiment 1. FIG. 2 is a plan view of the contact-pressure spring portion in embodiment 1. FIG. 3 is a side view when a contact-pressure load is applied to a vacuum valve 100 by a contact-pressure spring 1 in embodiment 1. Inside the vacuum valve 100, a fixed contact and a movable contact, which are not shown, are provided, and the movable contact is connected to a movable side 100B. A columnar shaft 2 is provided at the center of the contact-pressure spring 1 which applies a contact-pressure load to the vacuum valve 100. At one end of the shaft 2, a pipe 3 joined thereto by a pin 32 is provided, and a load from the contact-pressure spring 1 is received by an end surface of the pipe 3. The other side of the pipe 3 is connected to an insulation rod 103 on the movable side 100B of the vacuum valve 100, which constitutes a main circuit. Also on the other side of the contact-pressure spring 1, a pipe 4 is provided, the contact-pressure spring 1 and the pipe 4 contact with each other, and the pipe 4 is connected via a pin 54 to a link 5 which is rotated by an operation mechanism (not shown). The pin 54 penetrates the shaft 2 provided at the center of the contact-pressure spring 1, and a hole 2A through which the pin 54 penetrates is an elongated hole formed in the movable range of the pin 54 so as not to contact with the pin 54. On an end surface on the other side of the pipe 4, a pipe end member holed at the center, i.e., a washer 4A is welded. A headless bolt 21 protruding out from an end surface of the shaft 2 penetrates through the hole of the washer 4A. A double nut 6 is attached to the headless bolt 21, and the position of the contact-pressure spring 1 is set by the position of the double nut 6.

Next, operation of the switch-opening speed adjustment mechanism configured as described above will be described.

FIG. 1 shows a state in which the fixed contact and the movable contact in the vacuum valve 100 are separated from each other. From this state, if the link 5 is rotated clockwise on the drawing by the operation mechanism, the pin 54 moves to the vacuum valve 100 side. Thus, the pipe 4 also moves to the vacuum valve 100 side to compress the contact-pressure spring 1. By the compression force of the contact-pressure spring 1, the movable contact in the vacuum valve 100 is pressed via the pipe 3, the insulation rod 103, and the movable side 100B, whereby the movable contact and the fixed contact in the vacuum valve 100 come into contact with each other, so that the link 5, the pipe 4, and the insulation rod 103 come into a state shown in FIG. 3.

Next, in order to decrease the switch-opening speed of the vacuum valve 100, in a state in which the fixed contact and the movable contact in the vacuum valve 100 are separated from each other, the double nut 6 is rotated so as to move toward the vacuum valve 100. Thus, the headless bolt 21 moves to the side opposite to the vacuum valve 100, whereby the shaft 2 also moves to the side opposite to the vacuum valve 100. Thus, the contact-pressure spring 1 is compressed via the pipe 4. Further, by the shaft 2 moving to the side opposite to the vacuum valve 100, the insulation rod 103 and the movable side 100B also move to the side opposite to the vacuum valve 100, and thus the movable contact moves leftward on the drawing. In this state, the fixed contact and the movable contact are brought into contact with each other, i.e., are closed, and then in this state, if the fixed contact and the movable contact are separated from each other, i.e., are opened, since the contact-pressure spring 1 has been compressed, the switch-opening speed is decreased by an amount corresponding to the compression force thereof.

On the other hand, in order to increase the switch-opening speed of the vacuum valve 100, the double nut 6 is rotated so as to move to the side opposite to the vacuum valve 100, reversely to the above case. Thus, the headless bolt 21 moves toward the vacuum valve 100, whereby the shaft 2 also moves toward the vacuum valve 100. Thus, the compression of the contact-pressure spring 1 is released via the pipe 4. Further, by the shaft 2 moving toward the vacuum valve 100, the insulation rod 103 and the movable side 100B also move toward the vacuum valve 100, and thus the movable contact moves rightward on the drawing. In this state, the fixed contact and the movable contact are brought into contact with each other, i.e., are closed, and then in this state, if the fixed contact and the movable contact are separated from each other, i.e., are opened, since the compression of the contact-pressure spring 1 has been released, the switch-opening speed increases by an amount of the release of the compression.

According to embodiment 1, the double nut 6 for adjusting the contact-pressure spring is provided on the front side of the link 5 of the operation mechanism, i.e., on the operation mechanism side, and thus the switch-opening speed of the vacuum valve 100 can be adjusted from the operation mechanism side (front side). Therefore, it is possible to adjust a load on a bellows (not shown) of the vacuum valve. That is, a load on the bellows can be reduced by decreasing the switch-opening speed.

In addition, since the position of the movable contact in an opened state can be adjusted rightward or leftward on the drawing, an effect that the insulation distance between poles of the movable contact and the fixed contact in an opened state can be lengthened or shortened is obtained.

Here, in adjustment of the switch-opening speed, a double nut is used for preventing loosening. However, instead of a double nut, a normal single nut may be used.

### Embodiment 2

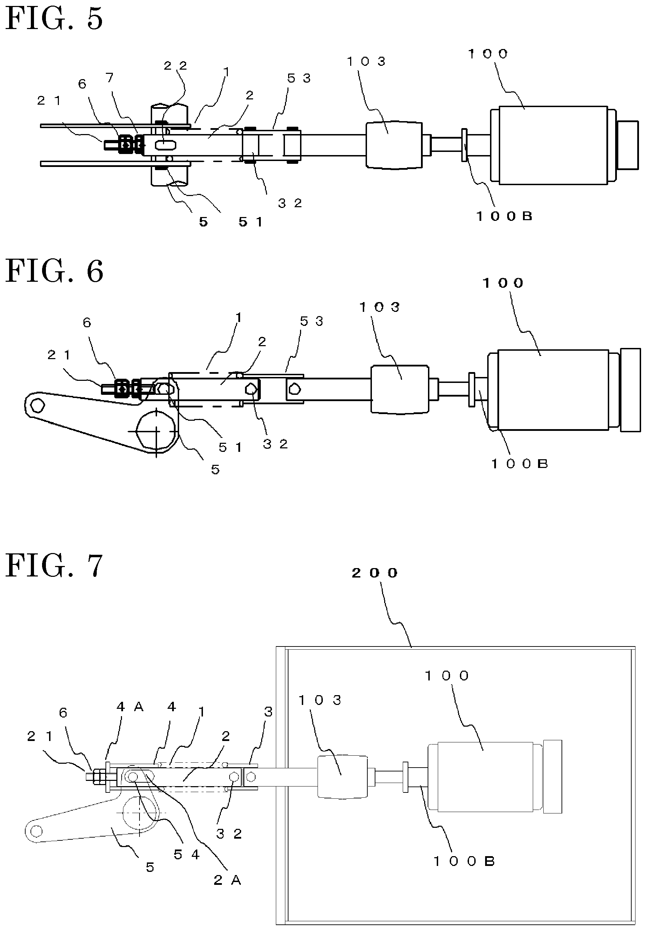

FIG. 4 is a side view of a contact-pressure spring portion in embodiment 2. FIG. 5 is a plan view of the contact-pressure spring portion in embodiment 2. FIG. 6 is a side view when a contact-pressure load is applied to a vacuum valve by a contact-pressure spring in embodiment 2. The shaft 2 is provided at the center of the contact-pressure spring 1. At one end of the shaft 2, a U-shaped sheet metal part 53 joined thereto by the pin 32 is provided, and a load from the contact-pressure spring 1 is received by an end surface of the sheet metal part 53. The other side of the sheet metal part 53 is connected to the insulation rod 103 on the movable side 100B of the vacuum valve 100, which constitutes a main circuit. The other side of the contact-pressure spring 1 directly contacts with the pin 51, and is connected via the pin 51 to the link 5 of the operation mechanism. The pin 51 penetrates the shaft 2 provided at the center of the contact-pressure spring 1, and a hole 2A through which the pin 51 penetrates is an elongated hole formed in the movable range of the pin 51 so as not to contact with the pin 51. In an end surface on the other side of the shaft 2, a screw hole penetrating to the hole 2A is formed. The headless bolt 21 is inserted into the screw hole, and a nut 7 is fitted to the headless bolt 21 so as to contact with the end surface of the shaft 2. The double nut 6 is fitted at a position separate from the nut 7. The position of the pin 51, i.e., the position of the contact-pressure spring 1 is set by the headless bolt 21. In addition, an opening 22 is formed in an upper surface of the shaft 2 so that the position of the pin 51 can be confirmed.

Next, operation of the switch-opening speed adjustment mechanism configured as described above will be described.

FIG. 4 shows a state in which the fixed contact and the movable contact in the vacuum valve 100 are separated from each other. From this state, if the link 5 is rotated clockwise on the drawing by the operation mechanism, the pin 51 moves to the vacuum valve 100 side. Thus, the contact-pressure spring 1 is compressed. By the compression force of the contact-pressure spring 1, the movable contact in the vacuum valve 100 is pressed via the sheet metal part 53, the insulation rod 103, and the movable side 100B, whereby the movable contact and the fixed contact in the vacuum valve 100 come into contact with each other, so that the link 5, the pipe 4, and the insulation rod 103 come into a state shown in FIG. 6.

Next, in order to decrease the switch-opening speed of the vacuum valve 100, in a state in which the fixed contact and the movable contact in the vacuum valve 100 are separated from each other, the nut 7 is loosened and then the double nut 6 is rotated so as to move toward the vacuum valve 100. Thus, the headless bolt 21 is also rotated so that the headless bolt 21 moves to the vacuum valve 100 side, thereby pressing the pin 51 to the vacuum valve 100 side. However, since the position of the pin 51 is fixed by the link 5, the shaft 2 is moved in the direction opposite to the vacuum valve 100. Thus, the sheet metal part 53 connected to the shaft 2 is also moved in the direction opposite to the vacuum valve 100, thereby compressing the contact-pressure spring 1. In addition, since the sheet metal part 53 is moved in the direction opposite to the vacuum valve 100, the movable contact in the vacuum valve 100 is moved via the insulation rod 103 and the movable side 100B, so that the gap between the movable contact and the fixed contact increases. In this state, the nut 7 is tightened to fix the position of the movable contact. In this state, the fixed contact and the movable contact are brought into contact with each other, i.e., are closed, and then in this state, if the fixed contact and the movable contact are separated from each other, i.e., are opened, since the contact-pressure spring 1 has been compressed, the switch-opening speed is decreased by an amount corresponding to the compression force thereof.

On the other hand, in order to increase the switch-opening speed of the vacuum valve 100, the nut 7 is loosened and then the double nut 6 is rotated so as to move in the direction opposite to the vacuum valve 100, reversely to the above case. Thus, the headless bolt 21 is also rotated so that the headless bolt 21 moves to the side opposite to the vacuum valve 100, thereby moving the shaft 2 toward the vacuum valve 100. Thus, the sheet metal part 53 connected to the shaft 2 is also moved toward the vacuum valve 100, whereby the compression of the contact-pressure spring 1 is released. Thus, the movable contact in the vacuum valve 100 is moved via the sheet metal part 53, the insulation rod 103, and the movable side 100B, so that the gap between the movable contact and the fixed contact decreases. In this state, the nut 7 is tightened to fix the position of the movable contact. In this state, the fixed contact and the movable contact are brought into contact with each other, i.e., are closed, and then in this state, if the fixed contact and the movable contact are separated from each other, i.e., are opened, since the compression of the contact-pressure spring 1 has been released, the switch-opening speed increases by an amount corresponding to the release of the compression.

According to embodiment 2, the double nut 6 for adjusting the contact-pressure spring is provided on the front side of the link 5 of the operation mechanism, i.e., on the operation mechanism side, and thus the switch-opening speed of the vacuum valve 100 can be adjusted from the operation mechanism side (front side). Therefore, it is possible to adjust a load on a bellows (not shown) of the vacuum valve. That is, a load on the bellows can be reduced by decreasing the switch-opening speed.

Further, in embodiment 2, effects are also obtained in which the number of components can be reduced and assembly workability can be improved, as compared to embodiment 1.

### Embodiment 3

FIG. 7 is a side view of a contact-pressure spring portion in embodiment 3. The configuration of the switch-opening speed adjustment mechanism is the same as that in embodiment 1. The part from the vacuum valve 100 to the insulation rod 3 is stored inside a tank 200, and airtightness is ensured at a part around the shaft of the insulation rod 3. In this state, in accordance with opening and closing of the vacuum valve 100, the insulation rod is driven in the same manner as the vacuum valve. The other components inside the tank 200 are not shown. This configuration is an example of a configuration in which the switch-opening speed adjustment mechanism described in embodiment 1 is applied a gas insulated switchgear.

According to embodiment 3, a switchgear that allows the switch-opening speed of the vacuum valve 100 to be easily adjusted can be obtained.

It is noted that, within the scope of the present invention, the above embodiments may be freely combined with each other, or each of the above embodiments may be modified or simplified as appropriate.

### DESCRIPTION OF THE REFERENCE CHARACTERS

- 1: contact-pressure spring
- 2: shaft
- 3: pipe
- 4: pipe
- 4A: washer
- 5: link
- 6: double nut
- 7: nut
- 21: headless bolt
- 22: opening
- 32: pin
- 51: pin
- 53: sheet metal part
- 54: pin
- 100: vacuum valve
- 100B: movable side
- 103: insulation rod
- 200: tank

## Claims

1. A switch-opening speed adjustment mechanism comprising:
a vacuum valve(100) having, inside the vacuum valve (100), a fixed contact and a movable contact contactable with and separable from the fixed contact;
an operation mechanism which causes the movable contact to contact with or be separated from the fixed contact;
a link(5) which is rotated by the operation mechanism;
a pin (54) which is moved in the contact/separation direction of the movable contact by the link(5);
a first pipe(4) connected to the pin(54);
a contact-pressure spring(1) which is in contact with an end of the first pipe (4) and applies a contact pressure to the movable contact;
a second pipe(3) in contact with a surface, of the contact-pressure spring(1), that is opposite to a side in contact with the first pipe(4);
a pipe end member (4A) welded to the other end of the first pipe(4);
a shaft(2) provided inside the first pipe(4), the contact-pressure spring(1), and the second pipe(3) concentrically therewith;
a headless bolt (21) which is in contact with an end of the shaft (2) and penetrates through the pipe end member (4A), an end of the headless bolt(21) being in contact with the shaft(2); and
a nut(6) which is screwed to the headless bolt(21) and which is rotated to compress or release the contact-pressure spring(1), thereby adjusting a switch-opening speed of the movable contact.

2. A switch-opening speed adjustment mechanism comprising:
a vacuum valve(100) having, inside the vacuum valve (100), a fixed contact and a movable contact contactable with and separable from the fixed contact;
an operation mechanism which causes the movable contact to contact with or be separated from the fixed contact;
a link(5) which is rotated by the operation mechanism;
a first pin(51) which is moved in the contact/separation direction of the movable contact by the link(5);
a contact-pressure spring(1) having an end in contact with the first pin (51), and applying a contact pressure to the movable contact;
a U-shaped sheet metal part(53) having an end in contact with the other end of the contact-pressure spring (1) ;
a shaft (2) having an end connected to the sheet metal part (53) with a second pin (32), and having a screw hole provided at the other end of the shaft (2), the shaft (2) being provided concentrically with the contact-pressure spring(1);
an elongated hole (2A) through which the first pin(51) penetrates the shaft(2) and inside which the first pin(51) moves;
a headless bolt(21) screwed into the screw hole penetrating to the elongated hole; and
a double nut(6) screwed to the headless bolt(21), wherein
by the double nut(6) being rotated, the contact-pressure spring(1) is compressed or released, thereby adjusting a switch-opening speed of the movable contact.

3. A switchgear comprising:
a tank(200); and
the switch-opening speed adjustment mechanism according to claim 1 or 2, wherein the vacuum valve (100) is stored inside the tank (200).

## Patentansprüche

1. Schaltöffnungs-Geschwindigkeitseinstellmechanismus, umfassend:
ein Vakuumventil (100), das im Inneren des Vakuumventils (100) einen feststehenden Kontakt und einen bewegbaren Kontakt aufweist, der mit dem feststehenden Kontakt in Kontakt bringbar und davon trennbar ist;
einen Betriebsmechanismus, der bewirkt, dass der bewegbare Kontakt mit dem feststehenden Kontakt in Kontakt gerät oder davon getrennt wird;
ein Verbindungselement (5), das durch den Betriebsmechanismus gedreht wird;
einen Stift (54), der durch das Verbindungselement (5) in die Kontakt/Trenn-Richtung des bewegbaren Kontakts bewegt wird;
ein erstes Rohr (4), das mit dem Stift (54) verbunden ist;
eine Kontaktdruckfeder (1), die mit einem Ende des ersten Rohrs (4) in Kontakt steht und Kontaktdruck auf den bewegbaren Kontakt ausübt;
ein zweites Rohr (3) in Kontakt mit einer Oberfläche der Kontaktdruckfeder (1), die einer Seite in Kontakt mit dem ersten Rohr (4) entgegengesetzt ist;
ein Rohrendelement (4A), das mit dem anderen Ende des ersten Rohrs (4) verschweißt ist;
einen Schaft (2), der im Inneren des ersten Rohrs (4) bereitgestellt ist, wobei die Kontaktdruckfeder (1) und das zweite Rohr (3) konzentrisch dazu angeordnet sind;
ein kopfloser Schraubbolzen (21), der mit einem Ende des Schafts (2) in Kontakt steht und durch das Rohrendelement (4A) hindurchdringt, wobei ein Ende des kopflosen Schraubbolzens (21) mit dem Schaft (2) in Kontakt steht; und
eine Mutter (6), die auf den kopflosen Schraubbolzen (21) geschraubt ist und die gedreht wird, um die Kontaktdruckfeder (1) zusammenzudrücken oder zu lösen, wodurch eine Schaltöffnungsgeschwindigkeit des bewegbaren Kontakts eingestellt wird.

2. Schaltöffnungs-Geschwindigkeitseinstellmechanismus, der Folgendes umfasst:
ein Vakuumventil (100), das im Inneren des Vakuumventils (100) einen feststehenden Kontakt und einen bewegbaren Kontakt aufweist, der mit dem feststehenden Kontakt in Kontakt bringbar und davon trennbar ist;
einen Betriebsmechanismus, der bewirkt, dass der bewegbare Kontakt mit dem feststehenden Kontakt in Kontakt gerät oder davon getrennt wird;
ein Verbindungselement (5), das durch den Betriebsmechanismus gedreht wird;
einen ersten Stift (51), der durch das Verbindungselement (5) in die Kontakt/TrennRichtung des bewegbaren Kontakts bewegt wird;
eine Kontaktdruckfeder (1), die mit einem Ende mit dem ersten Stift (51) in Kontakt steht und Kontaktdruck auf den bewegbaren Kontakt ausübt;
einen U-förmigen Metallblechteil (53), dessen eines Ende mit dem anderen Ende der Kontaktdruckfeder (1) in Kontakt steht;
einen Schaft (2), dessen eines Ende mit einem zweiten Stift (2) mit dem Metallblechteil (53) verbunden ist, und der ein Schraubloch aufweist, das am anderen Ende des Schafts (2) bereitgestellt ist, wobei der Schaft (22) konzentrisch mit der Kontaktdruckfeder (1) bereitgestellt ist;
ein längliches Loch (2A), durch das der erste Stift (51) durch den Schaft (2) hindurchdringt und in dessen Inneren sich der erste Stift (51) bewegt;
ein kopfloser Schraubbolzen (21), der in das Schraubloch geschraubt ist, der bis zu dem länglichen Loch hindurchdringt; und
eine Doppelmutter (6), die auf den kopflosen Schraubbolzen (21) geschraubt ist, wobei
durch die Drehung der Doppelmutter (6) die Kontaktdruckfeder (1) zusammengedrückt oder gelöst wird, wodurch eine Schaltöffnungsgeschwindigkeit des bewegbaren Kontakts eingestellt wird.

3. Schaltvorrichtung, umfassend:
einen Behälter (200); und
einen Schaltöffnungs-Geschwindigkeitseinstellmechanismus nach Anspruch 1 oder 2, wobei das Vakuumventil (100) im Inneren des Behälters (200) angeordnet ist.

## Revendications

1. Mécanisme d'ajustement de vitesse d'ouverture de commutation comprenant :
une soupape de dépression (100) présentant, à l'intérieur de la soupape de dépression (100), un contact fixe et un contact mobile pouvant être mis en contact avec et séparé du contact fixe ;
un mécanisme d'actionnement qui amène le contact mobile à venir en contact avec ou à être séparé du contact fixe ;
une liaison (5) qui est mise en rotation par le mécanisme d'actionnement ;
une broche (54) qui est déplacée dans la direction de contact/séparation du contact mobile par la liaison (5) ;
un premier tuyau (4) connecté à la broche (54) ;
un ressort de pression de contact (1) qui est en contact avec une extrémité du premier tuyau (4) et applique une pression de contact au contact mobile ;
un second tuyau (3) en contact avec une surface, du ressort de pression de contact (1), qui est opposée à un côté en contact avec le premier tuyau (4) ;
un élément d'extrémité de tuyau (4A) soudée à l'autre extrémité du premier tuyau (4) ;
un arbre (2) prévu à l'intérieur du premier tuyau (4), du ressort de pression de contact (1) et du second tuyau (3) concentriquement à ceux-ci ;
une vis sans tête (21) qui est en contact avec une extrémité de l'arbre (2) et pénètre à travers l'élément d'extrémité de tuyau (4A), une extrémité du boulon sans tête (21) étant en contact avec la tige (2) ; et
un écrou (6) qui est vissé à la vis sans tête (21) et qui est mis en rotation pour comprimer ou libérer le ressort de pression de contact (1), en ajustant ainsi une vitesse d'ouverture de commutation du contact mobile.

2. Mécanisme d'ajustement de vitesse d'ouverture de commutation comprenant :
une soupape de dépression (100) présentant, à l'intérieur de la soupape de dépression (100), un contact fixe et un contact mobile pouvant être mis en contact avec et séparé du contact fixe ;
un mécanisme d'actionnement qui amène le contact mobile à venir en contact avec ou à être séparé du contact fixe ;
une liaison (5) qui est mise en rotation par le mécanisme d'actionnement ;
une première broche (51) qui est déplacée dans la direction de contact/séparation du contact mobile par la liaison (5) ;
un ressort de pression de contact (1) présentant une extrémité en contact avec la première broche (51), et appliquant une pression de contact au contact mobile ;
une partie en tôle en forme de U (53) présentant une extrémité en contact avec l'autre extrémité du ressort de pression de contact (1) ;
un arbre (2) présentant une extrémité connectée à la partie en tôle (53) avec une seconde broche (32), et présentant un trou de vis prévu à l'autre extrémité de l'arbre (2), l'arbre (2) étant prévu concentriquement avec le ressort de pression de contact (1) ;
un trou allongé (2A) à travers lequel la première broche (51) pénètre dans l'arbre (2) et à l'intérieur duquel la première broche (51) se déplace ;
une vis sans tête (21) vissée dans le trou de vis pénétrant dans le trou allongé ; et
un double écrou (6) vissé à la vis sans tête (21), dans lequel
en faisant tourner le double écrou (6), le ressort de pression de contact (1) est comprimé ou libéré, en ajustant ainsi une vitesse d'ouverture de commutation du contact mobile.

3. Appareillage de commutation comprenant :
un réservoir (200) ; et
le mécanisme d'ajustement de vitesse d'ouverture de commutation selon la revendication 1 ou 2, dans lequel la soupape de dépression (100) est stockée à l'intérieur du réservoir (200).
